# EUROPEAN PATENT APPLICATION

(11) **EP 3 128 211 A1**
(43) Date of publication of application: **08.02.2017**
(21) Application number: 16181304.3
(22) Date of filing: 26.07.2016
(51) Int. Cl.: F16J 15/3236

(54) **SEAL FOR SEALING OF A ROTATING OR RECIPROCATING SHAFT OR PISTON**

(30) Priority: 27.07.2015 IT UB20152510
(71) Applicant: Fluorten S.r.l., 24060 Castelli Calepio (BG) (IT)
(72) Inventor: LEBEAU, Francis Louis J, 2060 ANTWERPEN (BE)

(57) **Abstract**

Cryogenic valve seal assembly comprising: a housing (20); a shaft (21); a space (23) between said housing (20) and said shaft (21); a seal (24) placed in said space (23); characterized in that said seal (24) comprises a first metal spring (25); a second metal spring (27); at least an polymer seal (26) to surround almost partially said first metal spring (25) and said second metal spring (27).

## Description

The present invention relates to a cryogenic valve seal assembly comprising a seal for sealing of a rotating or reciprocating shaft or piston, especially for lower and cryogenic temperature service. In other words, it relates to an integrated single piston effect (SPE) seal for sealing seats and shafts in cryogenic valves.

It is well known that for lower temperatures and cryogenic temperatures normal rubber seals cannot be used anymore. These materials become increasingly brittle and non-flexible with falling temperatures. Elastomer seals or also called rubber seals are used down to maximum -60°C. Below this temperature, elastomer or rubber seals cannot be used anymore because of bespoke change in mechanical properties.

It is also known that for temperatures where elastomer or rubber seals cannot function any more seal rings consisting of an elastic metallic spring and a surrounding jacket of ptfe or another plastic can be used. The advantage of such metal spring energised seals is that the metal spring is not affected by lower temperatures. Down to very low temperatures the metal spring in the spring energised seal will maintain its ability to compensate small deformations because of shrinkage of the surrounding seal faces. By the use of polymeric seals of ptfe better known as Teflon® or polytetrafluoroethylene the spring energised seal can be used down to cryogenic temperatures of lesser than -200°C. The leakage control of gas or liquid can be realised in a secure way without the risk that the seal will break at lower temperatures.

Although the bespoke and well known metal spring energised polymer seals maintain certain elasticity at lower and cryogenic temperatures, they do loose sealing capabilities and under certain conditions the seal performance reduction can be severe. In a metal spring energised polymer seal the metal spring needs to generate a seating and sealing load and needs to maintain this seating load up to a certain level. With lowering and cryogenic temperatures, the seal material becomes increasingly harder, which would require an increasingly higher seating load, however the opposite is happening. Apart from getting harder the seal material also shrinks a certain amount. In a radial seal configuration, this shrinkage exerts a force radially inward, on the spring, reducing the seating load of the seal material versus the outer seal contact surface. This load reduction can have a negative impact on the seal performance and the seal can leak above specified levels.

To adjust this performance, it is known to increase the spring load and/or to reduce the outer seal lip thickness. However, these measures cannot prevent the polymer material from becoming increasingly harder with lowering temperatures. In addition, it needs to be mentioned that there are limits to the level of load which can be packed into a certain seal size.

Although the mentioned measures are used with success in many applications, the known seal designs cannot always satisfy the seal performance requirements at lower and cryogenic temperatures.

The polymer material hardens and the seating load reduces because of shrinkage of this polymer material.

Although the know countermeasures such as reduction in polymer thickness, which reduces the shrinkage forces, and an increase in spring load, the known seal designs will not entirely satisfy specific tightness requirements. It must also be indicated that besides the fact that there is a limit to what load a spring can generate, without reducing its flexibility to much, a high spring load also creates a higher friction.

The object of the present invention is to provide a seal for sealing of a rotating or reciprocating shaft or piston, especially for lower and cryogenic temperature service, which overcome the technical drawbacks of the known art.

According to the present invention, these and further objects are achieved by a cryogenic valve seal assembly according to claim 1.

Further characteristics of the invention are described in the dependent claims.

The advantages of this solution compared to the solutions of the prior art are various.

The invention concerns a combination of spring energised seal designs giving a better seal performance at lower to cryogenic temperatures, more specific the new design will be capable of handling temperatures down to -200°C and lower while maintaining an extremely high degree tightness.

The new seal design is characterised by an integrated radial and face seal design. The internal part or inner diameter of the seal will handle the sealing function towards the shaft or piston. The integrated face type seal, also a metal spring energised polymer seal, is designed to handle the tightness towards the housing or outer mating surface.

The characteristics and advantages of the present invention will become apparent from the following detailed description of an embodiment thereof, that is illustrated by way of non-limiting example in the accompanying drawings, wherein:
Figure 1 schematically shows a cross sectional view of a portion of a cryogenic valve seal assembly, according to the prior art;
Figure 2 schematically shows a cross sectional view of a portion of a cryogenic SPE valve seal assembly, in a first embodiment of the present invention;
Figure 3 schematically shows a cross sectional view of a portion of a cryogenic SPE valve seal assembly, in a second embodiment of the present invention;
Figure 4 schematically shows a cross sectional view of a portion of a cryogenic SPE valve seal assembly, in a third embodiment of the present invention;
Figure 5 schematically shows a cross sectional view of a portion of a cryogenic SPE valve seal assembly, in a fourth embodiment of the present invention;
Figure 6 schematically shows a cross sectional view of a portion of a cryogenic SPE valve seal assembly, in a fifth embodiment of the present invention;
Figure 7 schematically shows a cross sectional view of a portion of a cryogenic SPE valve seal assembly, in a sixth embodiment of the present invention;
Figure 8 schematically shows a cross sectional view of a portion of a cryogenic SPE valve seal assembly, in a seventh embodiment of the present invention.

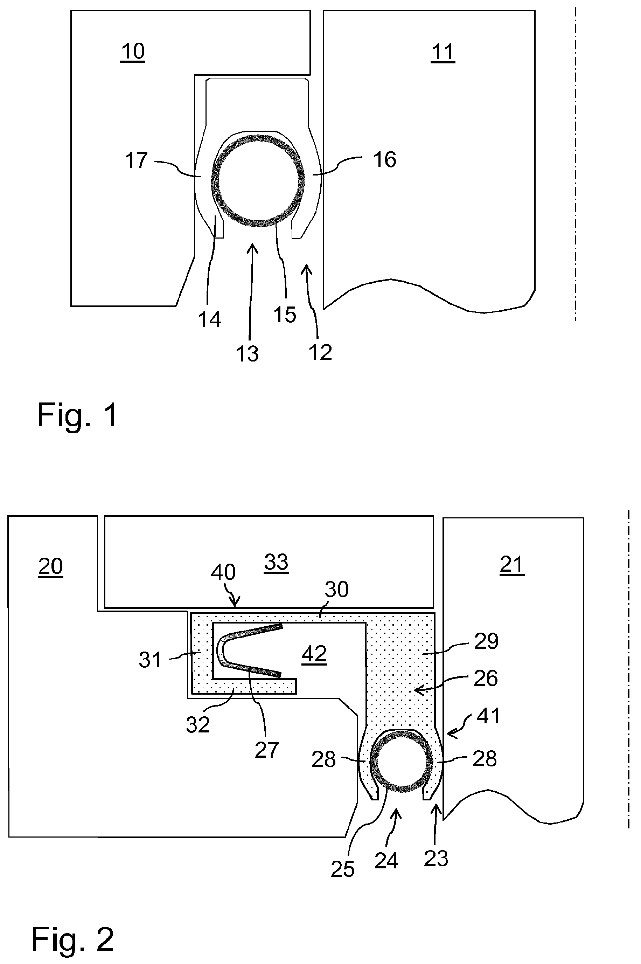

Referring to Figure 1, a cryogenic valve seal assembly, according to the prior art, comprises a housing 10 (or bore) and a shaft/sleeve 11 of a valve (not shown). In between there is a space 12 wherein a seal 13 must be fitted.

The seal 13 is a metal spring energised, as used for sealing the shaft 11 versus the housing 10 or a piston versus the housing 10.

A seal jacket 14 surround a metal spring 15.

The radial cross section of the seal 14 is bigger than the radial groove size 12 so that when assembled in the groove the seal 14 and spring 15 is radially compressed, generating hereby the bespoke seating load. The inner lip 16 is pushed against the shaft 11 and the outer lip 17 is pushed against the housing 10. Shrinkage of the outer lip 17, because of low temperature will unload the seating load of this very sealing lip versus the housing 10.

In Figure 2 illustrating the present invention, the outer or housing sealing is done by means of a secondary integrated spring energised seal.

In a first embodiment, there is a housing 20 and a shaft 21. In between there is space 23, having an L-shape section, wherein is placed a seal 24.

The seal 24 comprises a first helicoidally metal round spring 25 surrounded by a polymer seal 26, partially open.

The polymer seal 26, with the first round spring 25, forms a radial seal component 41 with a V spring or a helicoidal spring. The polymer seal 26 continues radially then rotate of 90° (on the left in the figure) to form an axial seal component 40. The radial seal component 41 is placed on an axis parallel to the shaft 21, and the axial seal component 40 is placed on an axis perpendicular to the shaft 21, and parallel to the cover 33.

In particular, the polymer seal 26, starts, with two lips 28 that surround, laterally, the first round spring 25, and then a single body 29 continues vertically (according to the figure) until it extends in a lateral and upper wall 30, then a vertical wall 31 (directed downwards according the figure) and a horizontally and lower wall 32.

The terminal part of the upper wall 30, the vertical wall 31 and the lower wall 32 surround on three parts the second spring 27.

The polymer seal 26 is machined from a fluoropolymer or another high performance polymer, for example with a filler to improve wear resistance and or friction.

The seal needs to be located in the housing and therefor needs a cover 33 holding it in position. The cover 33 needs to be bolted down to the housing 20 with enough force to counteract the hydrostatic pressure to which the system is subjected.

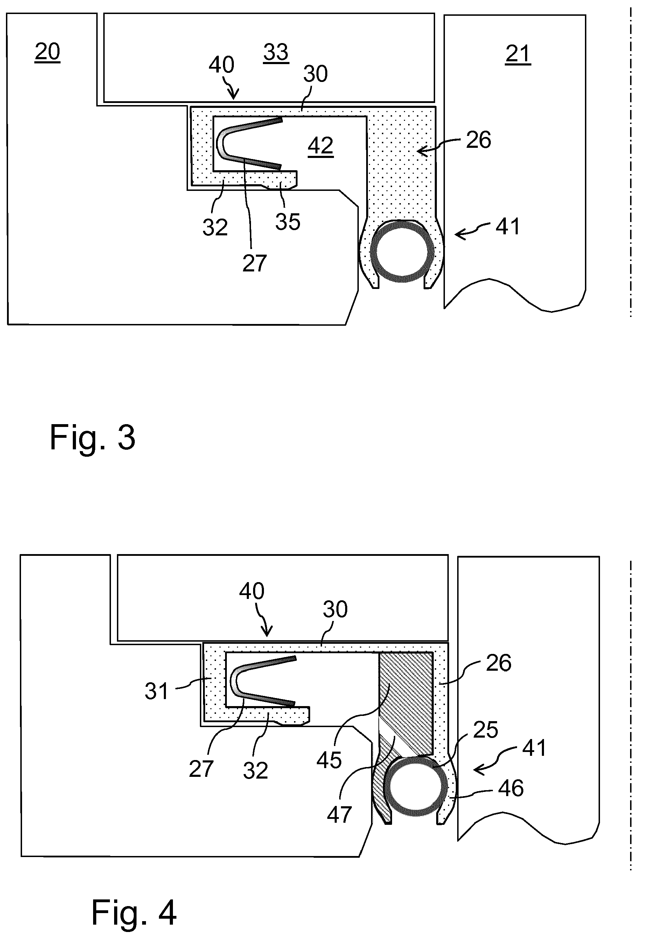

According to Figure 3 in a second embodiment the lower wall 32 ends with a thickened lip 35, toward the external compared to the second spring 27, for improving the sealing. Other elements of the seal 24 are the same as before described.

As before, the radial seal component 41 consist of a jacket with an inner and an outer lip 28 and an elastic metal spring 25 between the inner and the outer lip 28. The axial seal 40 consist of a shaped jacket formed by a seal lip 30 and 32 and an elastic metal spring 27.

The axial seal 40 is in this example an integral part of the radial seal 41, but it can also be a second and separate seal, as we described later.

The spring 25 in the radial seal 41 will be compressed upon installation between the bore 20 and the shaft 21, thereby creating a certain seating load on the shaft 21 and on the mating surface of the bore 20. The elastic metal spring 27 in the axial seal 40 will be compressed by bolting down the cover 33 to the bore 20.

When the system is cooled down the outer lip 28 of the radial seal 41 will lose seating load due to the shrinkage of the plastic material. The lower seating load combined with the increasing hardness of the plastic material will compromise the seal performance of the radial seal component 41. The axial seal element 40, also shrinks a certain amount but this shrinkage has no, or very little impact on the seating load. In addition, the spring load in this seal can be increased without having an impact on the friction of the radial component 41 versus the shaft 21. With higher pressure the cavity of the axial seal 40 will be energised. The hydrostatic pressure will thereby increase the seating load of the axial seal 40. Thanks to the integral or secondary seal there is no need any more for the radial seal 41 to be leak tight at the outer lip 28. In fact, the outer lip 28 has no sealing purpose anymore and it is better to remove the lip completely or to vent it, so that the system pressure can easily enter into the cavity 42.

According to Figure 4, in a third embodiment the radial seal 41 has an outer lip 45 as a separate machined part, compared to the polymer seal 26. This allows easier access to the integral face seal and in addition, it allows reducing the shrinkage force, generated, at lower temperatures.

An inner lip 46 continues vertically (according to the figure) and joins the lateral and superior wall 30, then the vertical wall 31 and the horizontally and inferior wall 32.

The outer lip 45 comprises a venting hole 47 that allows the pressure to enter the cavity of the axial seal.

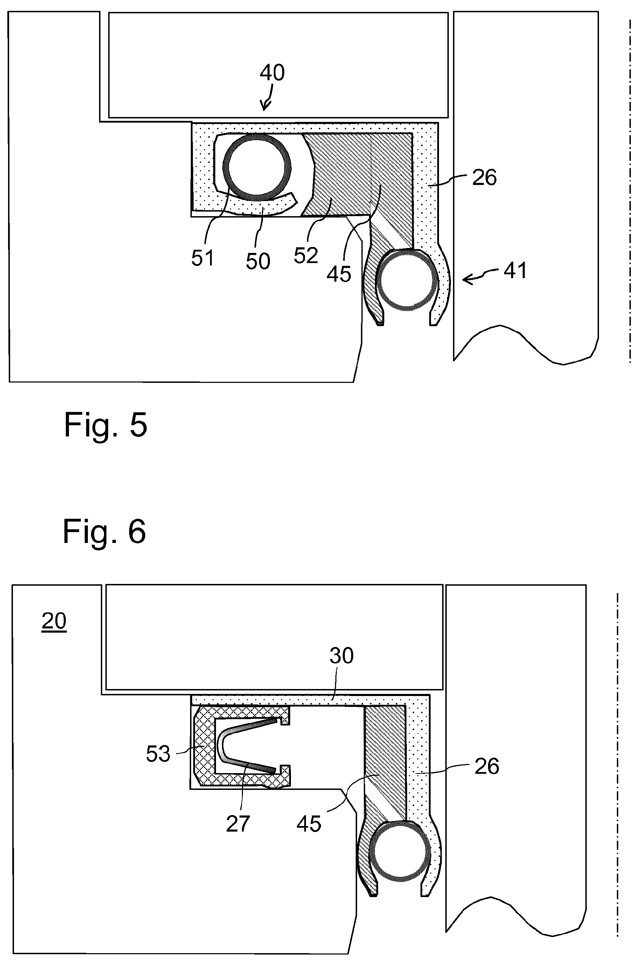

In a forth embodiment according to Figure 5, the polymer seal 26 is similar to the previous one exception of an inferior wall 50 of the axial seal 40 which has a shape of a semicircle accompanying the circular shape of a second spring 51. Moreover, the outer lip 45 of the radial seal 41 expands 52 to occupy almost everything inside the space between the axial seal 40 and the radial seal 41. Part 52 serves as an anti-shrinkage device and it holds the seal 26 in position to prevent axial movement of this element 26.

In a fifth embodiment, according to Figure 6, the radial seal 41 is similar to the third embodiment but the polymer seal 26 ends with the lateral and upper wall 30. The second spring 27, with a V section, is surrounded on three sides, by a separate seal 53 having a squared C section, wherein comes into touching with two side of the housing 20 and the remaining side with the wall 30.

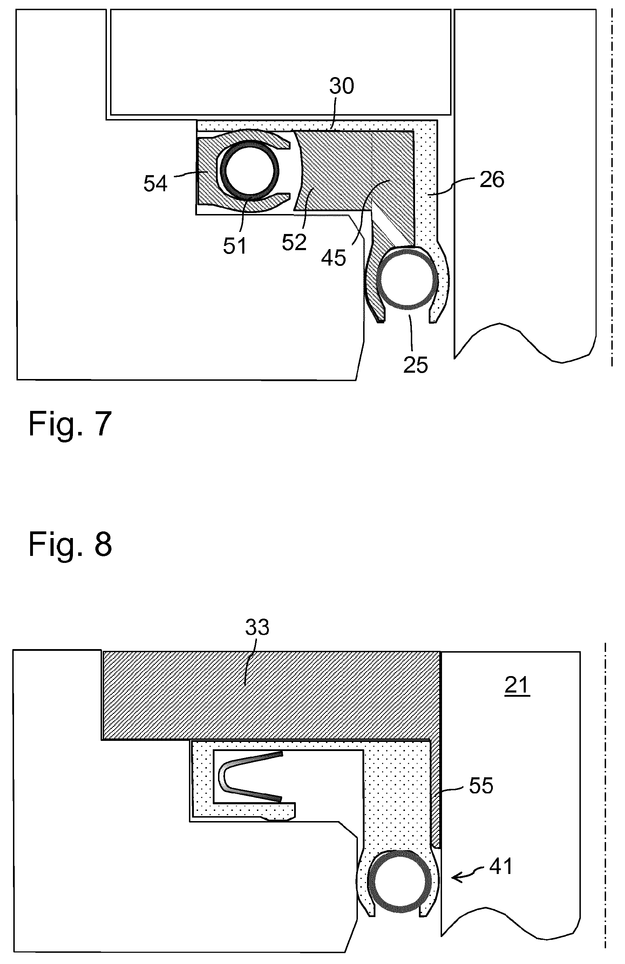

In a sixth embodiment, according to Figure 7, the polymer seal 26 ends with the lateral and upper wall 30. The outer lip 45 of the radial seal 41 expands 52 to occupy almost everything inside the space between the axial seal 40 and the radial seal 41. The second spring 51 has a circular shape, and a separate seal 54 having a semi-circular section shape surrounds it.

In a seventh embodiment according to Figure 8, the cover 33, on the side facing the shaft 21, has a retainer 55 ring that extends up to the proximity of the radial seal 41. The retainer 55 is then between the shaft 21 and the seal cover 26. (See Figure 7)

This retainer 55, designed with the correct thickness, will hold the seal heel for a better controllable friction. It will prevent the seal heel to shrink to the shaft, thereby reducing the friction versus the shaft.

The use of a separate axial seal allows for smaller diameter seal designs. However this designs means an additional leak path.

## Claims

1. Cryogenic valve seal assembly comprising: a housing (20); a shaft (21); a space (23) between said housing (20) and said shaft (21 ); a seal (24) placed in said space (23); said seal (24) comprises a first metal spring (25); a second metal spring (27); at least an polymer seal (26) to surround almost partially said first metal spring (25) and said second metal spring (27); **characterised in that** said first metal spring (25) is a part of a radial seal (41) that seals against said shaft (21) and said second metal spring (27) is a part of an axial seal (40) that seals against said housing (20), wherein said radial seal (41) is placed on an axis parallel to said shaft (21) and said axial seal (40) is placed on an axis perpendicular to said shaft (21).

2. Cryogenic valve seal assembly according to claim 1 **characterized in that** said space (23) has a L-shape section.

3. Cryogenic valve seal assembly according to one of the previous claims **characterized in that** polymer (26) surround said first spring (25) and said second spring (27), on three sides leaving the fourth open.

4. Cryogenic valve seal assembly according to one of the previous claims **characterized in that** said space (23) is closed by a cover (33) placed between said housing (20) and said shaft (21).

5. Cryogenic valve seal assembly according to the previous claims **characterized in that** said cover (33) comprises a retainer (55) placed in proximity of said shaft (21).

6. Cryogenic valve seal assembly according to the previous claims **characterized in that** said retainer (55) extends along said shaft (21).

7. Cryogenic valve seal assembly according to one of the previous claims **characterized in that** said first spring (25) and said second spring (27) have a circular or V section shape.

8. Cryogenic valve seal assembly according to one of the previous claims **characterized in that** said seal (24) comprises a first polymer (26) to surround said first spring (25) and a second polymer (53, 54) to surround said second spring (27).

9. Cryogenic valve seal assembly according to one of the previous claims **characterized in that** by comprising a third polymer (26) to surround a first side of said first spring (25) to form an internal lip and a fourth polymer (45, 52) to surround a second side of said first spring (25) to form an outer lip.

10. Cryogenic valve seal assembly according to one of the previous claims **characterized in that** said second spring (27) is surrounded by a first polymer (26) and by a fourth polymer (45, 52).
